# EUROPEAN PATENT APPLICATION

(11) **EP 4 521 049 A1**
(43) Date of publication of application: **12.03.2025**
(21) Application number: 24751622.2
(22) Date of filing: 04.06.2024
(51) Int. Cl.: F27B 3/22, F27D 7/04, F27D 3/00

(54) **EXHAUST STRUCTURE AND ELECTRODE MATERIAL HEAT TREATMENT APPARATUS INCLUDING SAME**

(30) Priority: 10.07.2023 KR 20230089086
(71) Applicant: Hanwha Momentum Corporation, Seongnam-si, Gyeonggi-do 13488 (KR)
(72) Inventor: LEE, Sung Mun, Seoul 04541 (KR); BANG, Seung Hwan, Seoul 04541 (KR); AN, Woo Sung, Seoul 04541 (KR)
(74) Representative: Gulde & Partner
(86) International application number: PCT/KR2024/007608
(87) International publication number: WO 2025/014095

(57) **Abstract**

Provided is an exhaust structure including a wall portion defining a first vertical exhaust path, a horizontal exhaust path, and a second vertical exhaust path, which communicate with one another, a supporting portion including a supporting portion body insertable into or removable from the horizontal exhaust path, and a receiving portion insertable into or removable from the supporting portion, wherein the receiving portion includes a receiving portion body that does not directly contact the wall portion by the supporting portion body.

## Description

### Technical Field

The present disclosure relates to an exhaust structure and an electrode heat treatment device.

### Background Art

A heat treatment furnace refers to a device for improving the physical properties of metals or non-metallic materials by applying high-temperature heat thereto. Heat treatment furnaces are classified into continuous roller hearth type heat treatment furnaces and batch type heat treatment furnaces according to a movement scheme of materials, and are used in a sintering process of various materials, etc., such as a firing process of secondary battery materials, etc.

The continuous roller hearth type heat treatment furnace loads materials into a container to transport the material to a reaction zone by using a roller, and then introduces a reaction gas that satisfies a predetermined atmosphere into the reaction zone to heat the same with a heater, thereby performing a firing process. The exhaust gas generated in the firing process hinders a firing process of a material and thus is discharged to the outside through an exhaust outlet provided in the reaction zone.

The exhaust gas includes various types of powder such as fine particles from materials and the heat treatment furnace as well as carbon dioxide and vapor. The exhaust outlet may become clogged depending on a type of powder, and conventionally, an operator may have to manually clean the exhaust outlet. To solve such a problem, a heat treatment furnace having a receiving portion for receiving powder in an exhaust outlet has been used. However, as a heat treatment process is repeated, a fire brick, etc., for dividing the exhaust outlet may be damaged and debris from the exhaust outlet may deform or damage the receiving portion, and thus, the receiving portion inserted into the exhaust outlet may not be removed.

The above-described information disclosed in the technology section that serves as the background of the present disclosure is only for improving the understanding of the background of the present disclosure, and thus, may include information that does not constitute related art.

### Disclosure

### Technical Problem

An exhaust structure and an electrode heat treatment device including the same according to embodiments of the present disclosure may stably collect particles of an exhaust gas and may facilitate insertion and withdrawal of a receiving portion into and from the exhaust structure.

However, technical problems to be solved by embodiments of the present disclosure are not limited to the above-mentioned problem, and other problems not mentioned may be clearly understood by those of ordinary skill in the art from the description of the present disclosure described below.

### Technical Solution

According to an embodiment of the present disclosure, an exhaust structure includes a wall portion defining a first vertical exhaust path, a horizontal exhaust path, and a second vertical exhaust path, which communicate with one another, a supporting portion including a supporting portion body insertable into or removable from the horizontal exhaust path, and a receiving portion insertable into or removable from the supporting portion, in which the receiving portion includes a receiving portion body that does not directly contact the wall portion by the supporting portion body.

The receiving portion body may include a horizontal portion having a flat top and an inclined portion inclinedly extending downwardly from an end of the horizontal portion, in which the horizontal exhaust path horizontally extends from a side of the first vertical exhaust path, the second vertical exhaust path vertically extends from a side of the horizontal exhaust path, and the supporting portion body may include a communicating hole open toward the second vertical exhaust path.

A connection point between the horizontal portion and the inclined portion may be at a same distance as or farther than a front edge of the communicating hole in a length direction of the exhaust structure.

A length of the horizontal exhaust path may be greater than or equal to a length of the supporting portion body and the receiving portion body.

The supporting portion may include a supporting portion flange located on a front surface of the supporting portion body and contacting an outer surface of the wall portion corresponding to the horizontal exhaust path while the supporting portion body is being inserted into the horizontal exhaust path, and the receiving portion may include a receiving portion flange located on a front surface of the receiving portion body and contacting an outer surface of the supporting portion flange while the receiving portion body is being inserted into the supporting portion body.

The wall portion may include a buffering zone formed above the horizontal exhaust path on a top of the first vertical exhaust path and a reinforcing member on one or more inner surfaces of the buffering zone.

The wall portion may further include an inclined surface inclinedly extending downwardly from a rear end of the horizontal exhaust path.

The receiving portion body may include a horizontal portion having a flat top and a portion protruding upwardly from a center portion of the horizontal portion in a length direction of the exhaust structure and being coaxial with the second vertical exhaust path.

A surface of the supporting portion body facing the horizontal exhaust path may have an open shape, and a cross-sectional area of the communicating hole may be less than a cross-sectional area of the surface of the supporting portion body.

According to an embodiment of the present disclosure, an electrode heat treatment device includes a plurality of zones through which a material sequentially passes, in which the plurality of zones include a pre-heating zone pre-heating the material, a heating zone located at a rear of the pre-heating zone and heating the material to a set temperature, a holding zone located at a rear of the heating zone and maintaining a temperature corresponding to the heating zone, and a cooling zone located at a rear of the holding zone and cooling the material, in which the electrode heat treatment device further includes an exhaust structure connected to at least one of the plurality of zones, and the exhaust structure includes the above-described exhaust structure.

However, effects that may be obtained through the present disclosure are not limited to the above-described effects, and other technical effects not mentioned may be clearly understood by those of ordinary skill in the art from the description of the present disclosure described below.

### Advantageous Effects

An exhaust structure and an electrode heat treatment device including the same according to embodiments of the present disclosure may stably collect particles of an exhaust gas and easily insert and withdraw a receiving portion.

### Description of Drawings

The following drawings attached to the present specification illustrate embodiments of the present disclosure, and together with the description of the present disclosure described later, serve to allow the technical idea of the present disclosure to be understood. The present disclosure is not to be construed as limited to the matters described in the drawings.
FIG. 1 illustrates an electrode heat treatment device including an exhaust structure.
FIG. 2 illustrates a cross-section of the electrode heat treatment device.
FIG. 3 illustrates an exhaust structure.
FIG. 4 illustrates a supporting portion and a receiving portion of the exhaust structure.
FIG. 5 illustrates a side of the receiving portion.
FIG. 6 illustrates a front of the receiving portion.
FIG. 7 illustrates a plane of the receiving portion.
FIG. 8 illustrates a side of a supporting portion.
FIG. 9 illustrates a front of the supporting portion.
FIG. 10 illustrates a plane of the supporting portion.
FIG. 11 illustrates an exhaust structure.
FIG. 12 illustrates a receiving portion.
FIG. 13 illustrates a receiving portion.

### BEST MODE

According to embodiments of the present disclosure, an exhaust structure includes a wall portion defining a first vertical exhaust path, a horizontal exhaust path, and a second vertical exhaust path, which communicate with one another, a supporting portion including a supporting portion body insertable into or removable from the horizontal exhaust path, and a receiving portion insertable into or removable from the supporting portion, in which the receiving portion includes a receiving portion body that does not directly contact the wall portion by the supporting portion body.

### Mode for Invention

Embodiments of the present disclosure may be understood with reference to the description and drawings. The described embodiments may have various modifications and be implemented in different forms, and are not limited to the embodiments described herein. In addition, some or all of the features of each of various embodiments of the present disclosure may be combined with each other. The embodiments may be implemented independently of or in relation to each other. The described embodiments are provided as examples to ensure that the present disclosure is perfect and complete, and are intended to completely convey the spirit of the present disclosure to those of ordinary skill in the art. The present disclosure is replaceable in all modifications, equivalents, and the spirit and technical scope of the present disclosure. Accordingly, processes, elements, and techniques that are not necessary for those of ordinary skill in the art to fully understand the embodiments of the present disclosure may not be described.

Unless otherwise mentioned throughout the accompanying drawings and specification, the same reference numerals, letters, or combinations thereof indicate the same components, and thus redundant descriptions are omitted. Moreover, in order to clearly describe the present disclosure, parts unrelated to the description are omitted.

The relative sizes of elements, layers, and regions in the drawings may be exaggerated for clarity. The use of hatching and/or shading in the accompanying drawings is generally provided to clarify boundaries between adjacent elements. Thus, the presence or absence of hatching or shading does not indicate a particular material, material features, dimensions, proportions, commonality between figure elements, and/or any other features, attributes of the element, a preferred form or requirement related to the attributes, unless specified.

Various embodiments are described herein with reference to cross-sectional examples that are schematic illustrations of embodiments and/or intermediate structures. Thus, appearance of the drawings may therefore vary, for example as a result of manufacturing techniques and/or tolerances. A detailed structural or functional description disclosed herein may be merely an example for describing an embodiment according to the concept of the present disclosure. Therefore, embodiments disclosed herein are not to be construed as limited to the shapes of shown areas, and include, for example, a deviation in shape according to manufacturing.

The areas shown in the drawings are schematic in nature, and the shapes thereof are not intended to either illustrate or limit the actual shapes of device areas. Moreover, as recognized by those of ordinary skill in the art, the described embodiments may be modified in various ways without departing from the spirit or scope of the present disclosure.

Numerous specific details are set forth to provide thorough understanding of the various embodiments in the present specification. However, various embodiments may be carried out without these specific details or with one or more details. In other cases, well-known structures and devices are shown in the form of a block diagram to unnecessarily obscure various embodiments.

Spatially relative terms, such as "below", "above", "under", "on", and the like, may be used herein for ease of description to describe a relationship between one element or feature and another element(s) or feature(s) as illustrated in the drawings. Spatially relative terms may be intended to encompass different directions of the device in use or operation in addition to the direction depicted in the drawings. For example, when the device in the drawing is turned over, other elements or features described as "under" or "bottom" would then be oriented "on" the other elements or features. Thus, the example term "under" and "bottom" may encompass both directions of above and under. The device may be oriented in other directions (for example, rotated 90 degrees or oriented in other directions), and the spatially relative descriptors used herein should be interpreted accordingly. Likewise, when a first part is referred to as being arranged "on" a second part, it may mean that the first part is arranged on an upper side or a lower side of the second part.

An expression "viewed in a plane" means viewing an object from top, and an expression "in a schematic cross-sectional view" means taking a schematic cross-section by cutting the object vertically. The term "viewed from a side" means that a first object may be on or under or to a side of a second object, and vice versa. Additionally, the term "overlap" or "superpose" may include layer, stack, face, extending over, covering, or partly covering or any other suitable term as would be appreciated and understood by those of ordinary skill in the art. The expression "not overlapping" may include a meaning "away from" or "spaced apart from" and any other suitable equivalents as would be appreciated and understood by those of ordinary skill in the art. The terms "face" and "surface" mean that a first object may directly or indirectly oppose a second object. When a third object is between the first object and the second object, the first object and the second object may be understood as being indirectly opposed to each other, although still facing each other.

When an element, a layer, a region, or a component is mentioned as being "formed" in, "connected" to, or "coupled" to another element, another layer, another region, or another component, it may be directly formed on the element, the layer, the region, or the component, or the other element, layer, region, or component, or may be directly formed in, connected to, or coupled to the other element, layer, region, or component. In addition, "formed", "connected", or "coupled" may refer to direct or indirect coupling or connection or integral or non-integral coupling or connection of the elements, layers, regions, or components such that one or more elements, layers, regions, or components are present. For example, when an element, a layer, a region, or a component is mentioned as being "electrically connected" or "electrically coupled" to another element, layer, region, or component, it may be directly and electrically connected or coupled to the other element, layer, region, or component or another element, layer, region, or component may be present. However, "direction connection" or "direct coupling" may mean that one component is directly connected or coupled to the other component or is on the other component, without an intermediate component. Moreover, herein, when a part of a layer, a film, a region, a guide plate, etc., is formed on another part, a formation direction is not limited to an "on" direction and the part may be formed on a side of or under the other part. On the other hand, when a part of the layer, film, region, guide plate, etc., is formed "under" the other part, it may include not only a case where the part is "immediately under" the other part, but also a case where another part is present between the part and the other part. Meanwhile, other expressions describing a relationship between components like "between", "immediately between", or "adjacent to" or "immediately adjacent to" may be interpreted similarly. In addition, when an element or layer is mentioned as being "between" two elements or layers, it may mean that the element or layer is a sole element between the two elements or layers or another element is present therebetween.

For the purpose of the present specification, the expression such as "at least one" or "any one" does not limit the order of individual elements. For example, "at least one of X, Y and Z", "at least one of X, Y or Z", and "at least one selected from a group consisting of X, Y, and Z" may include X alone, Y alone, Z alone, and any combination of two or more of X, Y and Z. Likewise, the expression such as "at least one of A and B" and "at least one of A or B" may include A, B, or A and B. Herein, the term "and/or generally includes all combinations of one or more related list items. For example, the expression "A and/or B" may include A, B, or A and B.

While terms such as "first", "second", "third", etc., may be used to describe various elements, components, regions, layers, and/or cross-sections, such components, components, regions, layers, and/or cross-sections are not limited by the terms. These terms may be used to distinguish one element, component, region, layer, or cross-section from another element, component, region, layer, or cross-section. Thus, a first element, component, region, layer, or cross-section discussed below may be referred to as a second element, component, region, layer, or cross-section, without departing from the spirit and range of the present disclosure. The description of an element as the "first" element may not either require or imply the presence of a second element or another element. The terms "first", "second", etc. may also be used herein to differentiate different categories or sets of elements. For clear expression, the terms "first", "second", etc., may represent "a first category (or a first set)", "a second category (or a second set)", etc., respectively.

The term used herein is used to describe particular embodiments, and is not intended to limit the present disclosure. As used herein, the singular expression is intended to encompass the plural expression and the plural expression is intended to encompass the singular expression, unless indicated otherwise in the context. The terms "comprise", "include", and/or "have" mean designation of the presence of a feature, an integer, and a step specified in use herein. These expressions do not exclude the presence or addition of one or more other functions, steps, operations, components, and/or groups thereof.

When one or more embodiments are implemented differently, a specific process order may be different from a described order. For example, two processes described in succession may be performed substantially simultaneously, or may be performed in an order reverse to the order described.

The term "substantially", "about", or "approximately" and other similar terms are used as a term of approximation rather than a term of degree, and means satisfaction with an inherent deviation (e.g., a deviation range due to limitation of a measurement system) of a measured or calculated value. For example, "about" may mean within one or more standard deviations, or within ±30 %, 20 %, 10 % or 5 % of the stated value.

All of the terms used herein including technical or scientific terms have the same meanings as those generally understood by those of ordinary skill in the art of the disclosure, unless they are defined other. The terms defined in a generally used dictionary should be interpreted as having the same meanings as the meanings in the context of the relevant technology and/or the present disclosure, and should not be interpreted as having ideal or exaggerated meanings unless they are clearly defined herein.

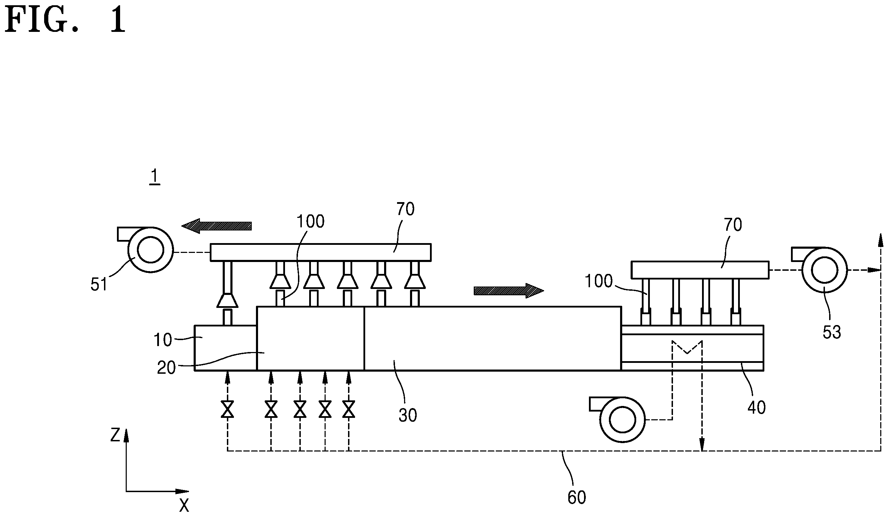

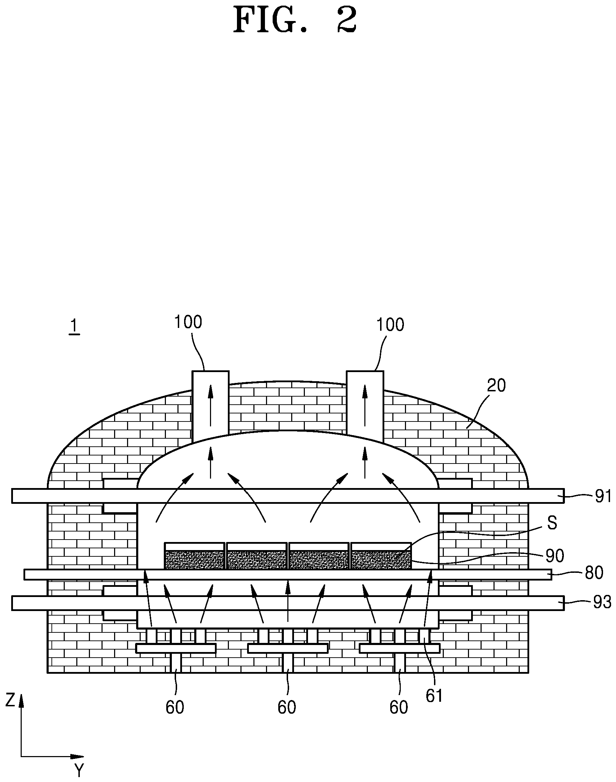

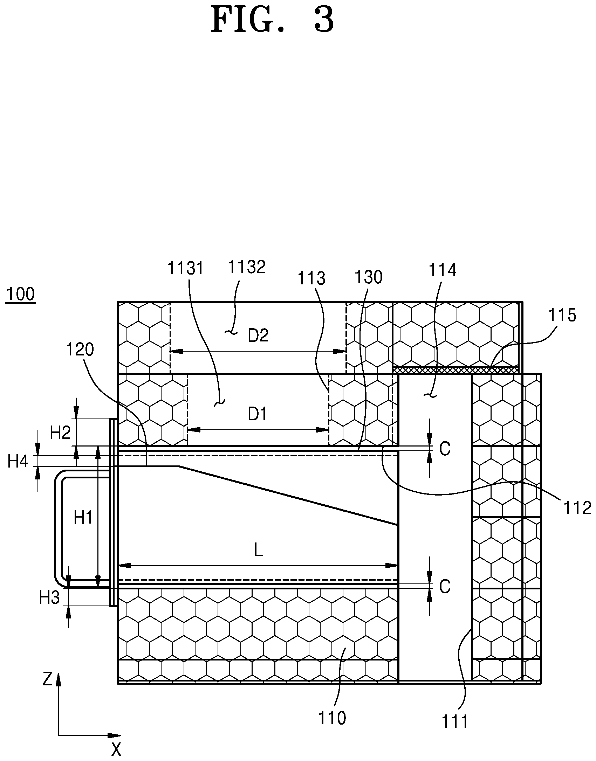

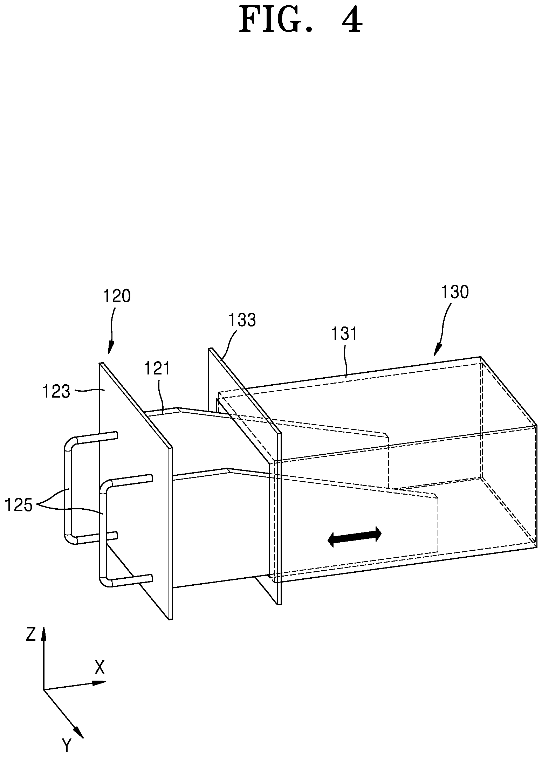

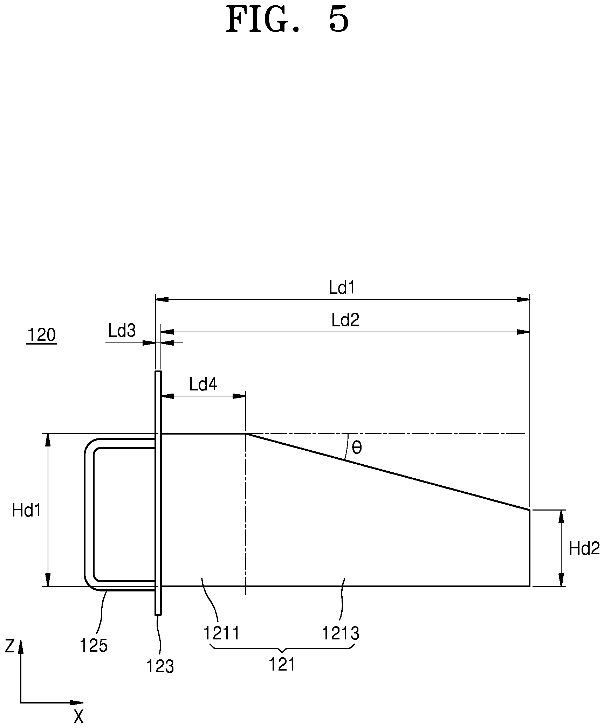

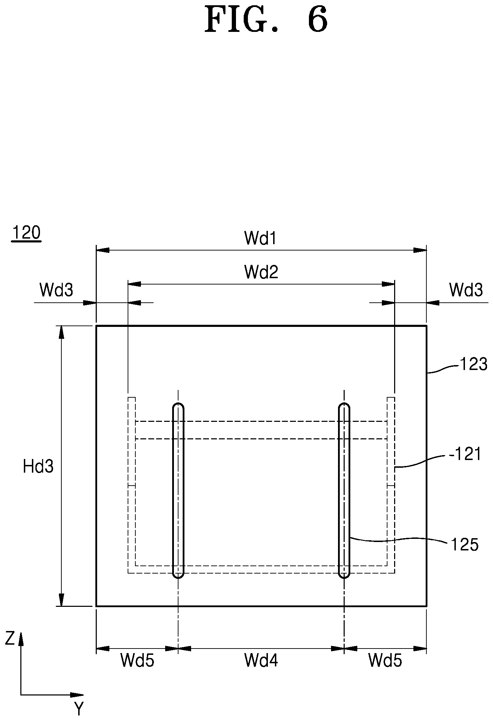

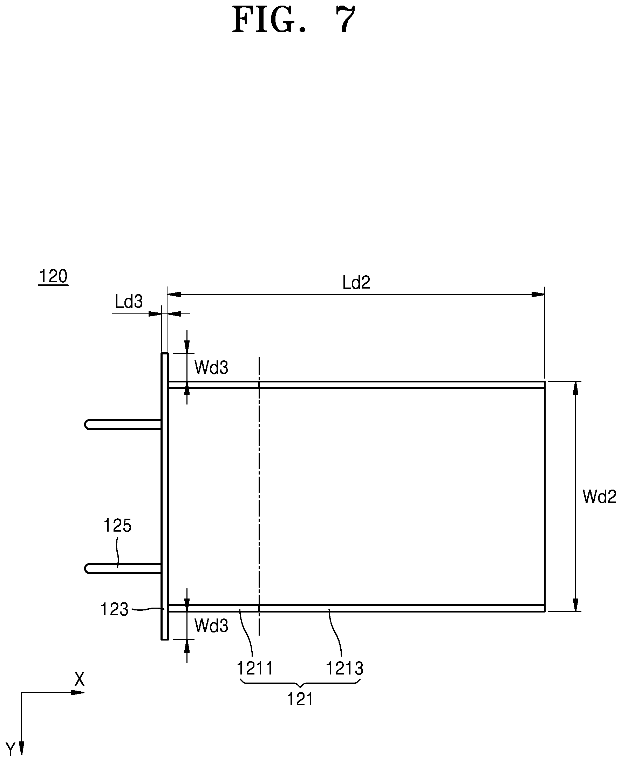

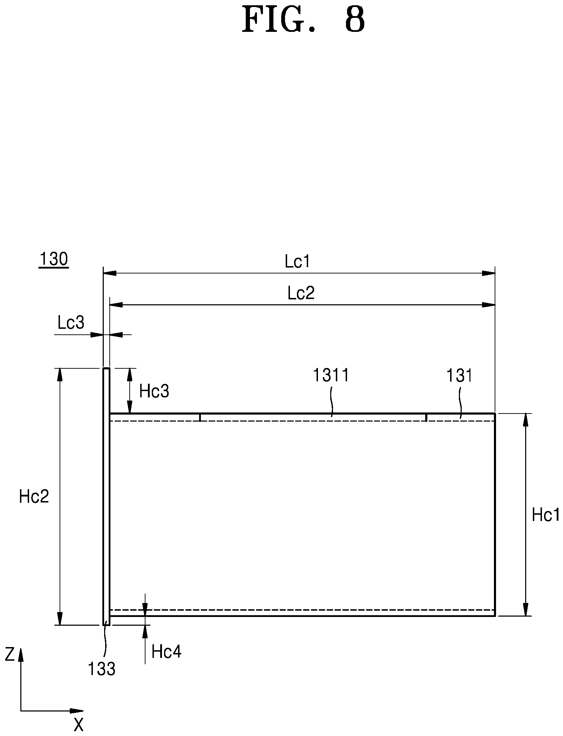

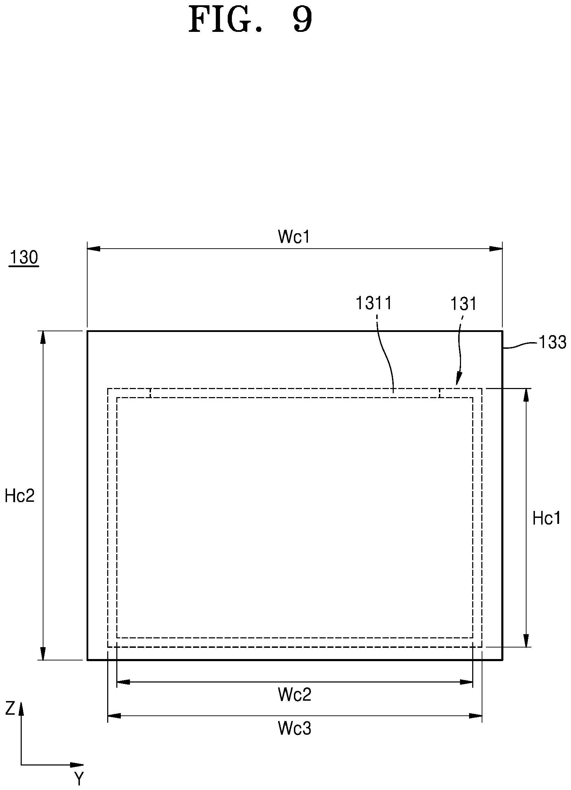

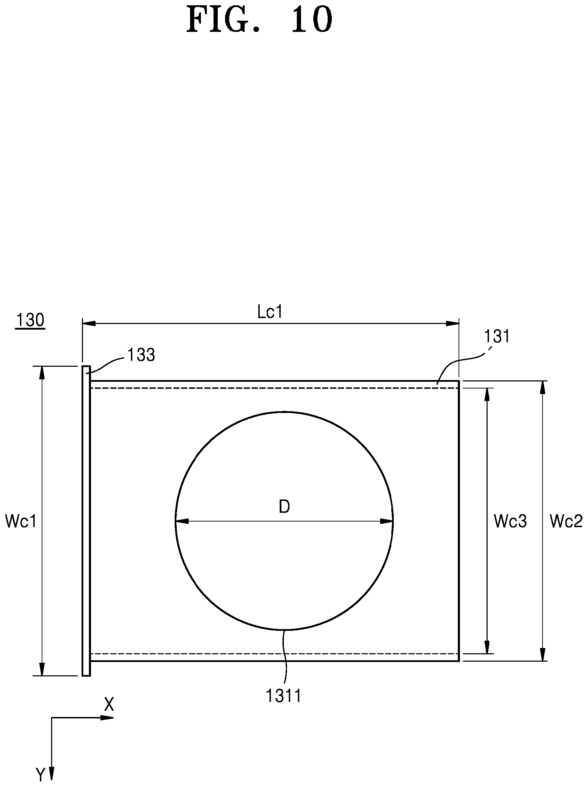

FIG. 1 illustrates an electrode heat treatment device 1 including an exhaust structure 100, FIG. 2 illustrates a cross-section of the electrode heat treatment device 1, FIG. 3 illustrates the exhaust structure 100, FIG. 4 illustrates a receiving portion 120 and a supporting portion 130 of the exhaust structure 100, FIG. 5 illustrates a side of the receiving portion 120, FIG. 6 illustrates a front of the receiving portion 120, FIG. 7 illustrates a plane of the receiving portion 120, FIG. 8 illustrates a side of the supporting portion 130, FIG. 9 illustrates a front of the supporting portion 130, and FIG. 10 illustrates a plane of the supporting portion 130.

The electrode heat treatment device 1 may change physical properties by heat-treating a material S and may be used to process metals, an alloys, and other materials. For example, the electrode heat treatment device 1 may be used to fire the material S that is an anode active material and/or a cathode active material for a secondary battery. For example, the material S may be a cathode active material and may be a raw material of a cathode active material of a lithium ion battery, such as LC0(LiCoO₂), NCM(Li(Ni, Co, Mn)O₂), NCA(Li(Ni, Co, Al)O₂), LMO(LiMn₂O₄), LFO(LiFePO₄), etc. The material S may be received in a case C such as a sagger, etc., and may be transferred by a roller 80 in the electrode heat treatment device 1.

For example, the electrode heat treatment device 1, which is a roller hearth type heat treatment device, may include a pre-heating zone 10, a heating zone 20, a holding zone 30, a cooling zone 40, exhaust devices 51 and 53, a supply pipe 60, an exhaust pipe 70, the roller 80, heaters 91 and 93, and an exhaust structure 100.

As shown in FIG. 1, the pre-heating zone 10 may be located at the front of the electrode heat treatment device 1 and may pre-heat the material S and transfer the material S to the heating zone 20. The pre-heating zone 10 may pre-heat the material S to prevent an excessive load from being applied to the heating zone 20. When the material S is a lithium transition metal compound, the material S includes a large amount of oxygen and thus moisture may be generated in the material S in a heat treatment process. The pre-heating zone 10 may further include a moisture discharge hood (not shown) to smoothly remove and discharge moisture. The pre-heating zone 10 may pre-heat the material S to 50 °C to 200 °C, or 70 °C to 150 °C, or 90 °C to 120 °C. The pre-heating zone 10 may receive high-temperature gas from the supply pipe 60 and pre-heat the material S. Alternatively, the pre-heating zone 10 may pre-heat the material S through a separate heater.

The heating zone 20 may be located at the rear of the pre-heating zone 10 and may heat the material S to a predetermined temperature. The heating zone 20 may heat the material S by using high-temperature gas or heat the material S by using a heater. For example, as shown in FIG. 2, there may be the heaters 91 and 93 in the heating zone 20. The heaters 91 and 93 may be on and under the roller 80 that transfers the material S, and may heat the material S. According to a type of the material S, heating temperatures of the heaters 91 and 93 may change. The heaters 91 and 93 may heat the material S to 500 °C to 1500 °C, 700 °C to 1400 °C, 800 °C to 1300 °C, 950 °C to 1250 °C, 700 °C to 900 °C, or 300 °C to 400 °C.

The holding zone 30 may be located at the rear of the heating zone 20 and perform heat treatment by holding the heated material S at a temperature similar to that of the heating zone 20. That is, after the material S is primarily heated in the heating zone 10, the material S is heated to a temperature for heat treatment in the heating zone 20 and then heat-treated while being held at the temperature for heat treatment in the holding zone 30.

The cooling zone 40 may be located at the rear of the holding zone 30 and cool the material S heat-treated in the holding zone 30. The cooling zone 40 may cool the material S by using low-temperature gas. The material S passing through the cooling zone 40 may be discharged to outside of the electrode heat treatment device 1.

The exhaust devices 51 and 53 may discharge the exhaust gas generated in the heat treatment process to outside of the electrode heat treatment device 1. For example, the exhaust devices 51 and 53 may be blowing fans or blowing pumps and may be located at the front and the rear of the electrode heat treatment device 1, respectively. The exhaust devices 51 and 53 may be connected to the exhaust pipe 70 to discharge exhaust gas introduced from the exhaust structure 100 to the exhaust pipe 70 to outside.

The supply pipe 60 may be in the electrode heat treatment device 1 and may supply gas to the pre-heating zone 10, the heating zone 20, the holding zone 30, and/or the cooling zone 40. As shown in FIG. 2, one or more supply pipes 60 may be located under the heating zone 20 and supply gas for heating the material S to the heating zone 20. Alternatively, one or more supply pipes 60 may be located under the pre-heating zone 10 to supply gas for pre-heating the material S, one or more supply pipes 60 may be located under the holding zone 30 to hold the material S at high temperature, or one or more supply pipes 60 may be located under the cooling zone 40 to cool the material S.

The supply pipe 60 may include a plurality of branch pipes 61. The plurality of branch pipes 61 may be branched from each supply pipe 60 to discharge gas toward a bottom of the material S.

The exhaust pipe 70 may be connected to the plurality of exhaust structures 100 and the exhaust devices 51 and 53. For example, the exhaust pipe 70 may be connected to the exhaust structure 100 connected to at least one of the pre-heating zone 10, the heating zone 20, and the holding zone 30. As shown in FIG. 2, the exhaust pipe 70 may be located at each of the front and the rear of the electrode heat treatment device 1, and one exhaust pipe 70 may be connected to the plurality of exhaust structures 100 provided in the pre-heating zone 10, the heating zone 20, and the holding zone 30, and another exhaust pipe 70 may be connected to the plurality of exhaust structures 100 provided in the cooling zone 40.

The roller 80 may transfer the case C having the material S loaded thereon in the electrode heat treatment device 1. For example, as shown in FIG. 2, a plurality of rollers 80 may be in the heating zone 20 to cross the electrode heat treatment device 1 in a width direction (e.g., a Y-axis direction of FIG. 2) and may support and transfer a plurality of cases C. While the heating zone 20 is shown in FIG. 2, a plurality of rollers 80 may also be in the pre-heating zone 10, the holding zone 30, and the cooling zone 40 as well as the heating zone 20.

One or more exhaust structures 100 may be at a side of the electrode heat treatment device 1, and may be used to discharge exhaust gas generated in heat treatment of the material S. As shown in FIG. 1, one or more exhaust structures 100 may be on each of the pre-heating zone 10, the heating zone 20, the holding zone 30, and/or the cooling zone 40. One or more exhaust structures 100 may be in each zone in a length direction (e.g., an X-axis direction of FIG. 1) of the electrode heat treatment device 1, and one or more exhaust structures 100 may be in each zone in the width direction (e.g., the Y-axis direction of FIG. 2) of the electrode heat treatment device 1.

Each exhaust structure 100 may transfer exhaust gas generated in the pre-heating zone 10, the heating zone 20, the holding zone 30, and/or the cooling zone 40 to the exhaust pipe 70, and the exhaust gas may be discharged to outside through the exhaust devices 51 and 53. Although it is shown in FIG. 1 that the exhaust structure 100 is located at the front of the holding zone 30, the exhaust structure 100 may also span the entire length direction of the holding zone 30 or may be located at the rear of the holding zone 30. In addition, while it is shown in FIG. 2 that the electrode heat treatment device 1 includes two exhaust structures 100 in the width direction thereof, the electrode heat treatment device 1 may include one exhaust structure 100 or three or more exhaust structures 100 in the width direction thereof. Hereinbelow, for convenience of a description, the description will be focused on the exhaust structure 100 in the heating zone 20, but the exhaust structure 100 in the pre-heating zone 10, the holding zone 30, and/or the cooling zone 40 may also have the same configuration as the exhaust structure 100 in the heating zone 20.

For example, the exhaust structure 100 may include a wall portion 110, a receiving portion 120, and a supporting portion 130.

The exhaust structure 100 may include the wall portion 110 that defines a first vertical exhaust path 111, a horizontal exhaust path 112, and a second vertical exhaust path 113 that communicate with one another, the supporting portion 130 including a supporting portion body 131 insertable into and removable from the horizontal exhaust path 112, and the receiving portion 120 insertable into and removable from the supporting portion 130, in which the receiving portion 120 may include a receiving portion body 121 that does not directly contact the wall portion 110 by the supporting portion body 131.

The wall portion 110 may be a lining member that forms an overall shape of the exhaust structure 100 and defines an inner passage through which exhaust gas travels. The wall portion 110 may include a material with excellent fire resistance so as not to be easily damaged by high-temperature exhaust gas. When the material S includes lithium, a lithium element may penetrate into the wall portion 110 and thus cause the wall portion 110 to crack or peel. Thus, the wall portion 110 may include a material with excellent resistance to lithium reactivity. For example, the wall portion 110 may include a heat-resistant ceramic material such as alumina, mullite, cordierite, silicon carbide, etc. The wall portion 110 may include a plurality of fire bricks made of a heat-resistant ceramic material.

The wall portion 110 may define one or more exhaust paths in which exhaust gas generated in the pre-heating zone 10, the heating zone 20, the holding zone 30, and/or the cooling zone 40 travels. For example, as shown in FIG. 3, the wall portion 110 may define the first vertical exhaust path 111, the horizontal exhaust path 112, and the second vertical exhaust path 113 therein.

Into the first vertical exhaust path 111, exhaust gas generated in the pre-heating zone 10, the heating zone 20, the holding zone 30, and/or the cooling zone 40 may be introduced. The first vertical exhaust path 111 may extend in the height direction (e.g., the Z-axis direction of FIG. 3) and may be connected to the horizontal exhaust path 112.

The horizontal exhaust path 112 may extend in the horizontal direction (e.g., the X-axis direction of FIG. 3 or the length direction of the exhaust path 1) at a side of the first vertical exhaust path 111 and may have the receiving portion 120 and the supporting portion 130 inserted thereinto. As the exhaust gas introduced from the first vertical exhaust path 111 passes through the horizontal exhaust path 112, particles included in the exhaust gas may sink down. To prevent the sinking particles from blocking the horizontal exhaust path 112, the receiving portion 120 in the horizontal exhaust path 112 may collect the particles.

The horizontal exhaust path 112 may have a length L. For example, the length L of the horizontal exhaust path 112 may be equal to a length of the receiving portion body 121 and a length of the supporting portion body 131 described below. The length of the receiving portion body 121 and the length of the supporting portion body 131 may be at least 80 % but not more than 100 % of the length L of the horizontal exhaust path 112. When the length of the receiving portion body 121 and the length of the supporting portion body 131 are less than 80 % of the length L, the effect of collecting particles may be degraded. When the length of the receiving portion body 121 and the length of the supporting portion body 131 exceed 100 % of the length L, flow of the exhaust gas may be hindered by the receiving portion body 121 and the supporting portion body 131 that leave the horizontal exhaust path 112.

The horizontal exhaust path 112 may have a height H1. The height H1 may be greater than or equal to a height of the supporting portion 130. For example, a top surface and a bottom surface of the horizontal exhaust path 112 may be spaced apart from a top surface and a bottom surface of the supporting portion 130 by a gap C. Thus, even when a part of the wall portion 110 corresponding to the horizontal exhaust path 112 or the second vertical exhaust path 113 is damaged such as collapses, the supporting portion 130 may be smoothly taken out of the horizontal exhaust path 112.

The second vertical exhaust path 113 may extend in the vertical direction (e.g., a Z-axis direction of FIG. 3 or the height direction of the electrode heat treatment device 1) at a side of the horizontal exhaust path 112. For example, as shown in FIG. 3, the second vertical exhaust path 113 may extend from an upper portion of the horizontal exhaust path 112 in the vertical direction. The second vertical exhaust path 113 may be connected to the exhaust pipe 70.

The second vertical exhaust path 113 may include a first exhaust outlet 1131 and a second exhaust outlet 1132.

The first exhaust outlet 1131 may be under the second vertical exhaust path 113 and may be connected to the horizontal exhaust path 112. The first exhaust outlet 1131 may be formed to be circular and may have a diameter D1. The diameter D1 may be greater than or equal to a diameter D of a communicating hole 1311 of the supporting portion body 131, such that the exhaust gas may smoothly travel to the first exhaust outlet 1131 through the horizontal exhaust path 112, the receiving portion 120, and the supporting portion 130.

The second exhaust outlet 1132 may be on the second vertical exhaust path 113 and may be connected to the first exhaust outlet 1131 and the exhaust pipe 70. The second exhaust outlet 1132 may be formed to be circular and may have a diameter D2 greater than the diameter D1. The second exhaust outlet 1132 may be coaxial with the first exhaust outlet 1131. Thus, the exhaust gas may be smoothly discharged from the second vertical exhaust path 113 to the exhaust pipe 70.

For example, the wall portion 110 may further include a buffering zone 114. As shown in FIG. 3, the buffering zone 114 may be a zone formed above the horizontal exhaust path 112 in the height direction of the first vertical exhaust path 111. After a part of the exhaust gas introduced through the first vertical exhaust path 111 is introduced to the buffering zone 114 and is held temporarily, the part of the exhaust gas may be introduced to the horizontal exhaust path 112 at relatively low temperature, low speed, and low pressure. The buffering zone 114 may lower temperature, pressure, and flow rate of the exhaust gas to prevent high-temperature exhaust gas from being directly introduced to the horizontal exhaust path 112 and thus damaging the wall portion 110, the receiving portion 120, and the supporting portion 130 corresponding to the horizontal exhaust path 112.

For example, the wall portion 110 may further include a reinforcing member 115 corresponding to the buffering zone 114. As shown in FIG. 3, the reinforcing member 115 may cover one or more inner sides of the buffering zone 114 and prevent the wall portion 110 corresponding to the buffering zone 114 from being damaged by the high-temperature exhaust gas. The reinforcing member 115 may include a material having higher heat resistance and strength than the wall portion 110 in the other zones. While it is shown in FIG. 3 that the reinforcing member 115 is on a top surface of the buffering zone 114, the reinforcing member 115 may be on each side of the buffering zone 114.

The receiving portion 120 may receive particles included in the exhaust gas being in the horizontal exhaust path 112 and traveling to the second vertical exhaust path 113 through the horizontal exhaust path 112. The receiving portion 120 may be inserted into and removed from the supporting portion 130 in the horizontal exhaust path 112. Thus, by removing the receiving portion 120 from the supporting portion 130 to remove the particles received in the receiving portion 120 and then inserting the receiving portion 120 back into the supporting portion 130, particles generated in a heat-treatment process may be easily removed. The receiving portion 120 may include an alloy material capable of enduring a high-temperature and corrosive environment. For example, the receiving portion 120 may include a stainless steel alloy such as SUS310S.

For example, the receiving portion 120 may include the receiving portion body 121, a receiving portion flange 123, and a handle 125.

The receiving portion body 121 may directly receive particles included in exhaust gas, etc., and may be located at opposite sides of the receiving portion 120 and may be inserted into the supporting portion 130. As shown in FIG. 4, the receiving portion body 121 may have an open top surface to communicate with the first vertical exhaust path 111, the horizontal exhaust path 112, and the supporting portion 130. A pair of receiving portion bodies 121 may be spaced apart from each other in a width direction (e.g., the Y-axis direction of FIG. 4) of the receiving portion 120 and each may have a length Ld2. The length Ld2 may be a length from a rear surface of the receiving portion flange 123 to an end portion of the receiving portion body 121. As described above, the length Ld2 may be at least 80 % but not more than 100 % of the length L of the horizontal exhaust path 112. Ld2 may be equal to a length Lc2 of the supporting portion body 131 described below.

For example, the receiving portion body 121 may include a horizontal portion 1211 having a flat top and an inclined portion 1213 extending down inclinedly from an end of the horizontal portion 1211, in which the horizontal exhaust path 112 may extend horizontally from a side of the first vertical exhaust path 111, the second vertical exhaust path 113 may extend vertically from a side of the horizontal exhaust path 112, and the supporting portion body 131 may include the communicating hole 1311 open toward the second vertical exhaust path 113.

For example, the receiving portion body 121 may include the horizontal portion 1211 and the inclined portion 1213.

As shown in FIG. 5, the horizontal portion 1211 may extend from the rear surface of the receiving portion flange 123 and a top thereof may extend flat. The horizontal portion 1211 may have a length Ld4 and a height Hd1. The inclined portion 1213 may extend down inclinedly from the rear end of the horizontal portion 1211. As shown in FIG. 4, the top end of the horizontal portion 1211 may be spaced apart from a top inner side of the supporting portion 130 by a height H4. The length Ld4 may be 20 % to 60 % of Ld2. When the length Ld4 is less than 20 % of Ld2, the horizontal portion 1211 may become excessively short and thus an ability of the receiving portion 120 to collect particles may be degraded. For example, the horizontal portion 1211 may become excessively short and thus some particles may be collected inside the supporting portion 130, e.g., on the supporting portion body 131, rather than the receiving portion 120. When the length Ld4 exceeds 60 % of Ld2, the horizontal portion 1211 may become excessively long and the horizontal portion 1211 may be pressed by the supporting portion 130 due to deformation of the supporting portion 130, etc., making it difficult to withdraw or insert the receiving portion 120 from or into the supporting portion 130. For example, Ld4 may be 30 % to 50 % of Ld2.

A connection point between the horizontal portion 1211 and the inclined portion 1213 may be the same as or farther from the front edge of the communicating hole 1311 in the length direction (e.g., the X-axis direction of FIG. 5). The length Ld4 may have such a length that the connection point between the horizontal portion 1211 and the inclined portion 1213 is at 100 % to 120 % of a radius of the communicating hole 1311 of the supporting portion 130. That is, the connection point between the horizontal portion 1211 and the inclined portion 1213 may be away from the front edge of the communicating hole 1311 toward the front by 20 % of the radius of the communicating hole 1311, directly under the front edge of the communicating hole 1311. Thus, the horizontal portion 1211 does not cover the communicating hole 1311, making it easy for exhaust gas to travel. The receiving portion body 121 may have a width Wd2.

A top of the inclined portion 1213 may be inclined at an angle θ with respect to a horizontal plane. θ may be at least 20 degrees but not more than 80 degrees. For θ less than 20 degrees, a space between a top of the horizontal portion 1211 and a top inner surface of the supporting portion 130 may become narrow. As a result, in a state where the supporting portion 130 is deformed by debris of the wall portion 110, etc., the inclined portion 1213 may receive force by the deformed supporting portion 130 and thus may be deformed or the receiving portion 120 may be difficult to take out of the supporting portion 130. For θ exceeding 80 degrees, a slope of the inclined portion 1213 may become excessively steep, such that the receiving portion 120 may not sufficiently either hold or support particles and the particles may scatter from the receiving portion 120. Alternatively, θ may be at least 30 degrees but not more than 70 degrees.

For example, a rear-end height Hd2 of the inclined portion 1213 may be 50 % to 80 % of Hd1. When Hd2 is less than 50 % of Hd1, particles loaded on the receiving portion 120, etc., may scatter due to flow of exhaust gas. When Hd2 exceeds 80 % of Hd1, the rear end of the inclined portion 1213 may serve as a barrier to impede the flow of the exhaust gas and the particles may not be sufficiently received in the receiving portion 120. The length of the inclined portion 1213 may be greater than the length Ld4 of the horizontal portion 1211.

The receiving portion flange 123 may be at the front end of the receiving portion body 121 and may prevent the receiving portion 120 from being completely inserted into the supporting portion 130. The receiving portion flange 123 may have a rectangular shape and include one or more handles 125. The receiving portion flange 123 may have the height Hd2 higher than the receiving portion body 121. Thus, as shown in FIG. 3, in a state where the receiving portion 120 is inserted into the supporting portion 130, a top portion and a bottom portion of the receiving portion flange 123 may be supported by the supporting portion flange 133 of the supporting portion 130.

For example, the top portion of the receiving portion flange 123 may extend above the top end of the horizontal exhaust path 112 by a height H2. The bottom portion of the receiving portion flange 123 may extend under the bottom end of the horizontal exhaust path 112 by a height H3. The heights H2 and H3 by which the receiving portion flange 123 extends with respect to the edge of the horizontal exhaust path 112 may be greater than a gap between the horizontal exhaust path 112 and the supporting portion 130. Thus, the receiving portion flange 123 may be stably supported on the supporting portion 130.

The receiving portion flange 123 may have a width Wd1, and opposite sides of the receiving portion flange 123 may protrude by a width Wd3 from opposite sides of the receiving portion body 121. Thus, in a state where the receiving portion 120 is inserted into the supporting portion 130, the receiving portion flange 123 may be stably supported on the supporting portion 130. The width Wd3 may be 80 % to 120 % of a width Wc1 of the supporting portion flange 123 described below. When Wd3 is less than 80 % of Wc4, an area of the receiving portion flange 123 contacting the supporting portion flange 133 may be excessively narrow, such that the receiving portion 120 may not be properly supported on the supporting portion 130. When Wd3 exceeds 120 % of Wc4, the receiving portion flange 123 may protrude from the supporting portion flange 133 such that an area of a region spaced apart from the wall portion 110 may increase and thus the receiving portion flange 123 may be damaged in a process of inserting and withdrawing the receiving portion into or from the supporting portion 130. For example, Wd3 may be 90 % to 110 % of Wc4.

The receiving portion flange 123 may have a thickness Ld3. A length from a front surface of the receiving portion flange 123 to a rear end of the inclined portion 1213 may be equal to Ld1.

One or more handles 125 may be formed on a surface of the receiving portion flange 123. A user may hold the handles 125 to insert the receiving portion 120 into the supporting portion 130 or withdraw the receiving portion 120 from the supporting portion 130. The handles 125 may be located inwardly from a pair of receiving portion bodies 121 in the width direction (e.g., the Y-axis direction of FIG. 4).

The supporting portion 130 may be on the horizontal exhaust path 112 and may include the receiving portion therein. The supporting portion 130 may surround the exterior of the receiving portion 120 to prevent the receiving portion 120 from directly contacting an inner surface of the horizontal exhaust path 112. Thus, even when the wall portion 110 is damaged or collapses, the supporting portion 130 supports the debris of the wall portion 110, such that the receiving portion 120 may be stably inserted into or withdrawn from the supporting portion 130. The supporting portion 130 may include an alloy material capable of enduring a high-temperature and corrosive environment. For example, the supporting portion 130 may include a stainless steel alloy such as SUS310S.

For example, the supporting portion 130 may include the supporting portion body 131 and the supporting portion flange 133.

For example, the supporting portion 130 may include the supporting portion flange 133 that is on the front surface of the supporting portion body 131 and contact an outer surface of the wall portion 110 corresponding to the horizontal exhaust path 112 in a state where the supporting portion body 131 is inserted into the horizontal exhaust path 112, and the receiving portion 120 may include the receiving portion flange 123 that is on the front surface of the receiving portion body 121 and contacts an outer surface of the supporting portion flange 133 in a state where the receiving portion body 121 is inserted into the supporting portion body 131.

The supporting portion body 131 may be inserted into the horizontal exhaust path 112 and may receive the receiving portion body 121 therein. The supporting portion body 131 may have a rectangular parallelepiped shape with an empty interior and have a surface facing the first vertical exhaust path 111 and the other surface opposing the surface, in which the surface and the other surface are open. In addition, the supporting portion body 131 may have a height Hc1 and a length Lc2. The height Hc1 may be greater than or equal to the highest height Hd1 of the receiving portion body 121. As described above, the length Lc2 may be at least 80 % but not more than 100 % of the length L of the horizontal exhaust path 112. The supporting portion body 131 may have a width Wc2 between inner sides and a width Wc3 between outer sides. Wc2 may be greater than or equal to a width of the horizontal exhaust path 112. Wc3 may be greater than or equal to the width Wd2 of the receiving portion body 121.

The supporting portion body 131 may include the communicating hole 1311 on a top surface thereof. The communicating hole 1311 may be under the second vertical exhaust path 113 to enable exhaust gas introduced to the horizontal exhaust path 112 and the receiving portion 120 to travel to the second vertical exhaust path 113. The communicating hole 1311 may have a diameter D and greater than or equal to a diameter D1 of the first exhaust outlet 1131 of the second exhaust path 113. For example, the diameter D of the communicating hole 1311 may be 1 to 1.2 times the diameter D1 of the first exhaust outlet 1131 based on the flow characteristics of the introduced exhaust gas and particle collection capability. The communicating hole 1311 may be coaxial with the second vertical exhaust path 113.

The diameter D may be 50 % to 90 % of Wc3. When D is less than 50 % of Wc3, flow of the exhaust gas introduced from the horizontal exhaust path 112 to the second vertical exhaust path 113 may be hindered. When D exceeds 90 Z% of Wc3, the strength of the supporting portion body 131 may be weakened in the width direction (e.g., the Y-axis direction of FIG. 4) of the communicating hole 1311.

The communicating hole 1311 may have a set flat area. For example, the communicating hole 1311 may have a flat area less than a surface of the supporting portion body 131. To be specific, the flat area of the communicating hole 1311 may be 60 % to 95 % of the flat area of the surface of the supporting portion body 131. Herein, the surface of the supporting portion body 131 may mean an open surface facing the first vertical exhaust path 111. When the flat area of the communicating hole 1311 is less than 60 % of the flat area of the surface of the supporting portion body 131, fluid flowing into the supporting portion body 131 through the first vertical exhaust path 111 may not travel smoothly to the second vertical exhaust path 113. Moreover, when the flat area of the communicating hole 1311 exceeds 95 % of the flat area of the surface of the supporting portio body 131, the particle collecting capability may be degraded. Thus, the flat area of the communicating hole 1311 may satisfy the above-described range.

For example, the surface of the supporting portion body 131 facing the horizontal exhaust path 112 may have an open shape, and the cross-sectional area of the communicating hole 1311 may be less than the cross-sectional area of the surface of the open supporting portion body 131.

The supporting portion body 131 may be inserted into the horizontal exhaust path 112 and may receive the receiving portion body 121 therein. The supporting portion body 131 may have a rectangular parallelepiped shape with an empty interior and have a surface facing the first vertical exhaust path 111 and the other surface opposing the surface, in which the surface and the other surface are open.

The supporting portion flange 133 may be on the front surface of the supporting portion body 131, e.g., on the other surface of the supporting portion body 131. The supporting portion flange 133 may have a rectangular shape and may serve as a stopper to prevent the supporting portion body 131 from entering the first vertical exhaust path 111 when the supporting portion body 131 is inserted into the horizontal exhaust path 112.

The supporting portion flange 133 may include a through-hole. The through-hole of the supporting portion flange 133 may be formed on a region corresponding to the open other surface of the supporting portion body 131. The through-hole may have a shape corresponding to the receiving portio body 121 and may be provided with a width and a height corresponding to the width Wc3 between the inner sides of the supporting portion body 131 and a height between the inner sides.

The supporting portion flange 133 may serve as a topper when the receiving portion 120 is inserted. For example, the receiving portion 120 may be inserted into the supporting portion 130 through the through-hole of the supporting portion flange 133. When the receiving portion 120 is inserted by a set length, the receiving portion flange 123 may contact the supporting portion flange 133 in a region corresponding to the receiving portion flange 123. As a result, the supporting portion flange 133 may prevent the receiving portion 120 from being inserted by the set length or greater.

The supporting portion flange 133 may have a height Hc2, a thickness Lc3, and the width Wc1. The supporting portion flange 133 may include a top end extending upwardly from a top surface of the supporting body 131 by a height Hc3 in a height direction (e.g., a Z-axis direction of FIG. 8) and a bottom end extending downwardly from a bottom surface of the supporting body 131 by a height Hc4. A width Wc1 of the supporting portion flange 133 may be greater than the width Wc2 of the supporting portion body 131. Thus, the outer edge of the supporting portion flange 133 may be stably supported on the outer surface of the wall portion 110 corresponding to the horizontal exhaust path 112.

Hc3 may be 5 % to 20 % of Hc2. When Hc3 is less than 5 % of Hc2, the supporting portion flange 133 may not be correctly supported on the wall portion 110. When Hc3 exceeds 20 % of Hc2, an area of the supporting flange 133 contacting the wall portion 110 is excessively large, such that the supporting portion flange 133 may be damaged in a process of inserting the supporting portion 130 into or withdrawing the supporting portion 130 from the horizontal exhaust path 112.

Hc4 may be 5 % to 10 % of Hc2. When Hc4 is less than 5 % of Hc2, the supporting portion flange 133 may not be correctly supported on the wall portion 110. When Hc3 exceeds 10 % of Hc2, the bottom end of the supporting portion flange 133 may interfere with another member of the exhaust structure 100 and the area of the supporting portion flange 133 contacting the wall portion 110 becomes excessively large, such that the supporting portion flange 133 may be damaged during insertion or withdrawal of the supporting portion 130 into or from the horizontal exhaust path 112.

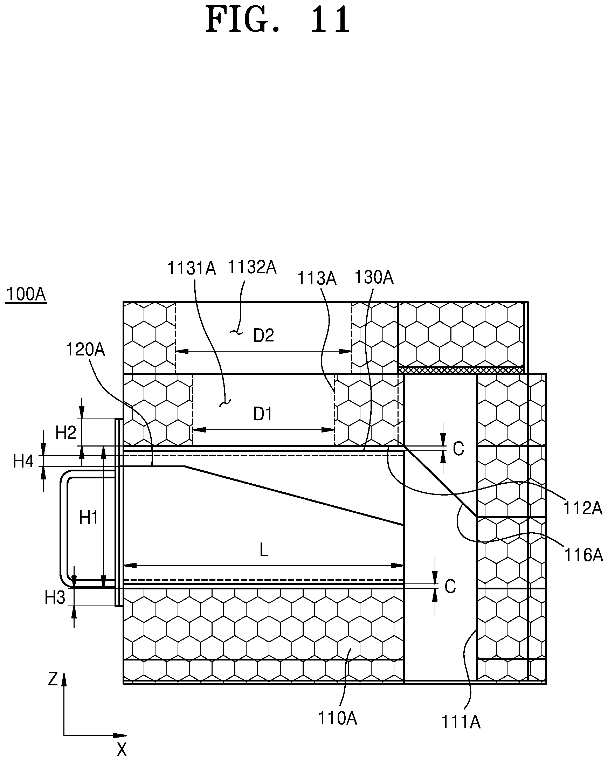

FIG. 11 illustrates an exhaust structure 100A.

The exhaust structure 100A may include the same components as the exhaust structure 100 according to the above-described embodiment, except for an inclined surface 116A. Hereinbelow, for convenience of a description, a description will be focused on the inclined surface 116A.

The exhaust structure 100A may include the wall portion 110A defining a first vertical exhaust path 111A, a horizontal exhaust path 112A, a second vertical exhaust path 113A, a receiving portion 120A, and a supporting portion 130A.

For example, the exhaust structure 100A may not include either the buffering zone 114 or the reinforcing member 115. Instead, the exhaust structure 100A may include the inclined surface 116A on a top of the first vertical exhaust path 111A. As shown in FIG. 11, the inclined surface 116A may be on the top of the first vertical exhaust path 111A and guide gas introduced from the first vertical exhaust path 111A to flow into the horizontal exhaust path 112A. Thus, the moving path of the exhaust gas may be shortened, and the exhaust gas may stably flow into the horizontal exhaust path 112A along the inclined surface 116A. The inclined surface 116A may inclinedly extend downwardly from the rear end of the horizontal exhaust path 112A. For example, a top end of the inclined surface 116A may extend downwardly from the top end of the horizontal exhaust path 112A and may be connected to the inner side of the first vertical exhaust path 111A. A bottom end of the inclined surface 116A may be at the same height as or higher than a center portion of the inclined surface 116A in the height direction (e.g., the Z-axis direction of FIG. 11) of the horizontal exhaust path 112A.

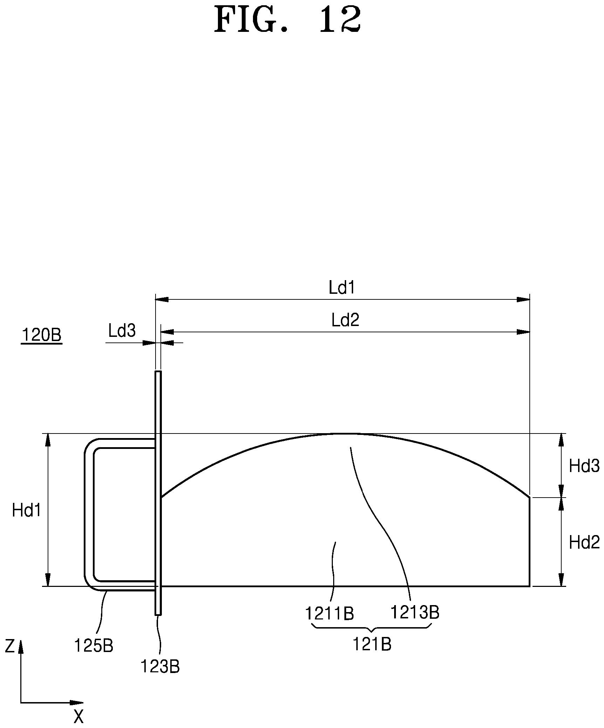

FIG. 12 illustrates a receiving portion 120B.

The receiving portion 120B may include the same components as the receiving portion 120 according to the above-described embodiment, except for a receiving portion body 121B. Hereinbelow, for convenience of a description, a description will be focused on the receiving portion body 121B. The components not shown in the drawings may be referred to as the same reference numerals as in the exhaust structure 100 according to the above-described embodiment.

The receiving portion 120B may include a receiving portion body 121B, a receiving portion flange 123B, and a handle 125B. The receiving portion body 121B may include a horizontal portion 1211B and a bent portion 1213B.

The horizontal portion 1211B may have a length Ld2 and a height Hd2 and have a flat top surface. The bent portion 1213B may protrude upwardly from a center portion of the horizontal portion 1211B in a length direction (e.g., the X-axis direction of FIG. 12) and may be coaxial with the second vertical exhaust path 113, and may convexly protrude upwardly from a top of the horizontal portion 1211B. The bent portion 1213B may have a height Hd3 and have the highest center in the longitudinal direction, and may be symmetric with respect to a center portion thereof. Thus, the bent portion 1213B may be sufficiently spaced apart from the supporting portion even when wall portion 110 and the supporting portion 130 are partially deformed around the end portion of the bent portion 1213B in the length direction, such that the bent portion 1213B may not be affected by deformation of the wall portion 110 and the supporting portion 130. The bent portion 1213B may have a high center portion in the length direction, thereby preventing particles received in the receiving portion 120B from scattering. The center portion of the bent portion 1213B may be coaxial with the communicating hole 1311 of the supporting portion 130. Thus, the center portion of the bent portion 1213B may correspond to the communicating hole 1311 and thus have an open top portion, thus avoiding an influence of deformation of the wall portion 110 and the supporting portion 130. A sum of the maximum heights of the horizontal portion 1211B and the bent portion 1213B may be a total height Hd1 of the receiving portion body 121B.

Hd3 may be 20 % to 50 % of Hd1. When Hd3 is less than 20 % of Hd1, a curvature of the bent portion 1213B may be reduced and a distance between opposite ends of the bent portion 1213B and an inner top surface of the supporting portion body 131 may excessively increase. Thus, the bent portion 1213B may interfere with the supporting portion body 131 due to deformation of the supporting portion body 131, etc. When Hd3 exceeds 50 % of Hd1, the curvature of the bent portion 1213B may increase and the distance between the opposite ends of the bent portion 1213B and the inner top surface of the supporting portion body 131 may excessively increase. Thus, a particle collection capability of the receiving portion body 121B may be degraded. For example, Hd3 may be 30 % to 40 % of Hd1.

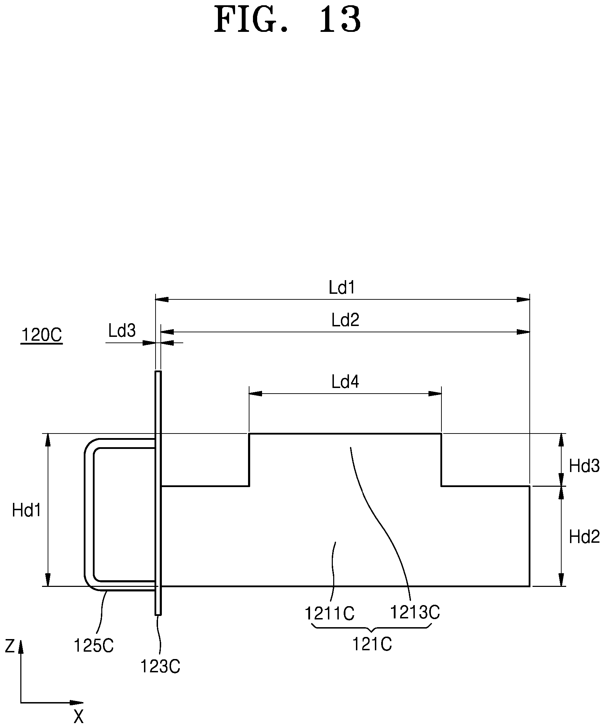

FIG. 13 illustrates a receiving portion 120C.

The receiving portion 120C may include the same components as the receiving portion 120 according to the above-described embodiment, except for a receiving portion body 121C. Hereinbelow, for convenience of a description, a description will be focused on the receiving portion body 121C. The components not shown in the drawings may be referred to as the same reference numerals as in the exhaust structure 100 according to the above-described embodiment.

The receiving portion 120C may include a receiving portion body 121C, a receiving portion flange 123C, and a handle 125C. The receiving portion body 121C may include a horizontal portion 1211C and a protruding portion 1213C.

The horizontal portion 1211C may have a length Ld2 and a height Hd2 and have a flat top surface. The protruding portion 1213C may protrude upwardly from a center portion of the horizontal portion 1211C in the length direction (e.g., the X-axis direction of FIG. 13) and may be coaxial with the second vertical exhaust path 113, and may protrude upwardly from the top of the horizontal portion 1211C. The protruding portion 1213C may protrude to have a height Hd3 from a center portion of the horizontal portion 1211C in the length direction and may have a step with the horizontal portion 1211C. Thus, the protruding portion 1213C may be sufficiently spaced apart from the supporting portion even when wall portion 110 and the supporting portion 130 are partially deformed around the end portion of the protruding portion 1213C in the length direction, such that the protruding portion 1213C may not be affected by deformation of the wall portion 110 and the supporting portion 130. The protruding portion 1213C may prevent the particles received in the receiving portion 120C from scattering. The protruding portion 1213C may correspond to the communicating hole 1311 of the supporting portion 130. Thus, the protruding portion 1213C may have an open top, thus avoiding an influence of deformation of the wall portion 110 and the supporting portion 130. A sum of the maximum heights of the horizontal portion 1211C and the protruding portion 1213C may be the total height Hd1 of the receiving portion body 121C.

Hd3 may be 10 % to 40 % of Hd1. When Hd3 is less than 10 % of Hd1, a height of the horizontal portion 1211C may excessively increase and a distance between a top surface of the horizontal portion 1211C and an inner top surface of the supporting portion body 131 may be excessively reduced. Thus, the horizontal portion 1211C may interfere with the supporting portion body 131 due to deformation of the supporting portion body 131, etc. When Hd3 exceeds 40 % of Hd1, the height of the horizontal portion 1211C may excessively increase and the distance between the top surface of the horizontal portion 1211C and the inner top surface of the supporting portion body 131 may excessively increase. Thus, a particle collection capability of the receiving portion body 121B may be degraded. For example, Hd3 may be 20 % to 30 % of Hd1.

As such, the present disclosure has been described with reference to the embodiments shown in the drawings, but this is merely an example. It would be fully understood by those of ordinary skill in the art that various modifications and other equivalent embodiments are possible from the embodiments. Therefore, the true technical scope of the present disclosure should be defined by the appended claims.

### Industrial Applicability

The present disclosure is available for the industry related to an exhaust structure and an electrode heat treatment device.

## Claims

1. An exhaust structure comprising:
a wall portion defining a first vertical exhaust path, a horizontal exhaust path, and a second vertical exhaust path, which communicate with one another;
a supporting portion comprising a supporting portion body insertable into or removable from the horizontal exhaust path; and
a receiving portion insertable into or removable from the supporting portion,
wherein the receiving portion comprises a receiving portion body that does not directly contact the wall portion by the supporting portion body.

2. The exhaust structure of claim 1, wherein the receiving portion body comprises:
a horizontal portion having a flat top; and
an inclined portion inclinedly extending downwardly from an end of the horizontal portion,
wherein the horizontal exhaust path horizontally extends from a side of the first vertical exhaust path, the second vertical exhaust path vertically extends from a side of the horizontal exhaust path, and the supporting portion body comprises a communicating hole open toward the second vertical exhaust path.

3. The exhaust structure of claim 2, wherein a connection point between the horizontal portion and the inclined portion is at a same distance as or farther than a front edge of the communicating hole in a length direction of the exhaust structure.

4. The exhaust structure of claim 1, wherein a length of the horizontal exhaust path is greater than or equal to a length of the supporting portion body and the receiving portion body.

5. The exhaust structure of claim 1, wherein the supporting portion comprises a supporting portion flange located on a front surface of the supporting portion body and contacting an outer surface of the wall portion corresponding to the horizontal exhaust path while the supporting portion body is being inserted into the horizontal exhaust path, and the receiving portion comprises a receiving portion flange located on a front surface of the receiving portion body and contacting an outer surface of the supporting portion flange while the receiving portion body is being inserted into the supporting portion body.

6. The exhaust structure of claim 1, wherein the wall portion comprises:
a buffering zone formed above the horizontal exhaust path on a top of the first vertical exhaust path; and
a reinforcing member on one or more inner surfaces of the buffering zone.

7. The exhaust structure of claim 1, wherein the wall portion further comprises an inclined surface inclinedly extending downwardly from a rear end of the horizontal exhaust path.

8. The exhaust structure of claim 1, wherein the receiving portion body comprises:
a horizontal portion having a flat top; and
a portion protruding upwardly from a center portion of the horizontal portion in a length direction of the exhaust structure and being coaxial with the second vertical exhaust path.

9. The exhaust structure of claim 2, wherein a surface of the supporting portion body facing the horizontal exhaust path has an open shape, and a cross-sectional area of the communicating hole is less than a cross-sectional area of the surface of the supporting portion body.

10. An electrode heat treatment device comprising a plurality of zones through which a material sequentially passes, wherein the plurality of zones comprises:
a pre-heating zone pre-heating the material;
a heating zone located at a rear of the pre-heating zone and heating the material to a set temperature;
a holding zone located at a rear of the heating zone and maintaining a temperature corresponding to the heating zone; and
a cooling zone located at a rear of the holding zone and cooling the material,
wherein the electrode heat treatment device further comprises an exhaust structure connected to at least one of the plurality of zones, and the exhaust structure comprises the exhaust structure according to any one of claims 1 to 9.
